# EUROPÄISCHE PATENTSCHRIFT

(11) **EP 1 940 638 B1**
(45) Veröffentlichungstag und Bekanntmachung des Hinweises auf die Patenterteilung: **10.12.2014**
(21) Anmeldenummer: 06805983.1
(22) Anmeldetag: 02.10.2006
(51) Int. Cl.: B60J 7/02

(54) **CABRIOLET-KRAFTFAHRZEUG**
CABRIOLET
VEHICULE CABRIOLET

(30) Priorität: 19.10.2005 DE 102005049933
(43) Veröffentlichungstag der Anmeldung: 09.07.2008
(73) Patentinhaber: GM Global Technology Operations LLC, Detroit, MI 48265-3000 (US)
(72) Erfinder: BRANDEL, Klaus, 65205 Wiesbaden (DE); LEOPOLD, Frank, 65232 Taunusstein-Orlen (DE)
(74) Vertreter: Strauss, Peter
(86) Internationale Anmeldenummer: PCT/EP2006/009538
(87) Internationale Veröffentlichungsnummer: WO 2007/045349

(56) Entgegenhaltungen:
- DE-A1- 10 144 001
- DE-A1- 10 345 123
- JP-A- 2003 063 253

## Beschreibung

Die vorliegende Erfindung liegt auf dem Gebiet der Kraftfahrzeugtechnik und betrifft ein Cabriolet-Kraftfahrzeug gemäß dem Oberbegriff von Anspruch 1.

In der Automobilindustrie werden Kraftfahrzeuge zur überwiegenden Nutzung als Transportfahrzeuge in der Art eines Pickups bislang mit offener Ladefläche gebaut, wodurch jedoch die Nutzbarkeit der Ladefläche bei schlechter Wit-terung eingeschränkt ist. Zudem sind Pickups zur Nutzung als reine Personen-Kraftfahrzeuge ungeeignet.

Weiterhin ist bekannt, kleine Geländewagen als Personen-Kraftfahrzeuge und als Nutzfahrzeuge mit geschlossener oder offener Ladefläche in der Art eines Pickups zu bauen. Solche Geländewagen sind mit einem abnehmbaren Hardtop oder cabrioähnlichen Verdeckmechanismen in Kombination mit Steckteilen oder festen Elementen versehen, um eine offene Ladefläche freizugeben und gleichzeitig die Möglichkeit einer geschlossenen Ladefläche zu bieten. In der Praxis hat sich jedoch die Montage derartiger Elemente als zeitraubend und arbeitsintensiv erwiesen, weshalb solche Fahrzeuge für lediglich gelegentliche Transporte unpraktisch sind. Weiterhin erfolgt bisher keine Abtrennung der Ladefläche von der Fahrgastzelle, so dass Abgase und kalte Außenluft in die Fahrgastzelle gelangen können.

Die gattungsgemäße Art wird in der DE 101 44 001 A1 offenbart.

Demgegenüber besteht die Aufgabe der vorliegenden Erfindung darin, ein offenes Kraftfahrzeug (Cabriolet) zu ermöglichen, das einerseits überwiegend als Personen-Kraftfahrzeug und andererseits überwiegend als Nutzfahrzeug, insbesondere in der Art eines Pickups mit offener oder geschlossener Ladefläche dienen kann.

Diese Aufgabe wird nach dem Vorschlag der Erfindung durch ein Cabriolet-Kraftfahrzeug mit den Merkmalen des unabhängigen Anspruchs gelöst. Vorteilhafte Ausgestaltungen der Erfindung sind durch die Merkmale der Unteransprüche angegeben.

Erfindungsgemäß ist ein Cabriolet-Kraftfahrzeug mit einem öffnenbaren Dach gezeigt, welches aus wenigstens zwei Dachsegmenten aufgebaut ist, die in eine Öffnungsstellung gebracht werden können. Das Kraftfahrzeug umfasst ferner hintere Dachsäulen ("C-Säulen") als Teil der Tragstruktur der Fahrzeugkarosserie, die durch wenigstens einen oberen Dachquerträger versteift sind, was auch als "Targateil" bezeichnet wird. Weiterhin ist im Bereich zwischen einem insbesondere die Windschutzscheibe umrahmenden Vorderrahmen der Frontstruktur des Kraftfahrzeugs und dem Targateil ein Überrollbügel (auch als "Targabügel" bezeichnet) angeordnet, welcher sich als Teil der Tragstruktur an der Fahrzeugkarosserie abstützt.

Das erfindungsgemäße Kraftfahrzeug zeichnet sich nun in wesentlicher Weise dadurch aus, dass die wenigstens zwei Dachsegmente mittels eines Bewegungsmechanismus zu einem zwischen dem Targabügel und dem Targateil angeordneten Dachsegmentestapel beispielsweise mittels Verschwenken und/oder Verschieben gestapelt werden können, wobei der Dachsegmentestapel anschließend um wenigstens einen am oberen Dachquerträger des Targateils angebrachten Lenker in die Fahrgastzelle verschwenkbar ist.

Wenn das Fahrzeug als 4-Sitzer mit Rücksitzen ausgestattet ist, ist es insbesondere bevorzugt, wenn der Dachsegmentestapel in eine hinter den Rücksitzen befindliche Position verschwenkt werden kann. Auf diese Weise kann der Dachsegmentestapel Platz sparend verstaut werden, ohne etwa auf Stauraum im Kofferraum zurückgreifen zu müssen. Durch Verschwenken des Dachsegmentestapels hinter die Rücksitze kann in einfacher Weise ein Fahrzeug mit einer rundum geschlossener Fahrgastzelle in ein offenes Perso-nen-Fahrzeug mit einer "Targa"-Struktur überführt werden. Zum Verschwenken des Dachsegmentestapels hinter die Rücksitze ist es im Allgemeinen notwendig, die Rücksitze zunächst nach vorne zu verschieben und die Rückenlehnen nach vorne umzulegen. Nach dem erfolgten Verschwenken des Dachsegmentestapels können die Rücksitze dann wieder in ihre Nutzstellung gebracht werden. Werden die Rücksitze jedoch nicht mehr in ihre Nutzstellung verbracht und gegebenenfalls den Vordersitzen möglichst eng angelegt, was beispielsweise durch Hochklappen der Sitzflächen und Anlegen der Rückenlehnen erfolgen kann, so entsteht ein Fahrzeug mit einer 2-sitzigen Targastruktur mit einer nach oben hin offenen Ladefläche.

Gemäß einer Ausgestaltung der Erfindung ist es besonders bevorzugt, wenn das Targateil im Bereich der Gürtellinie des Kraftfahrzeugs in Fahrzeuglängsrichtung verschiebbar ist. Nach dem Stapeln der Dachsegmente und Verschwenken des Dachsegmentestapels in die Fahrgastzelle, insbesondere in eine Position hinter den Rücksitzen, kann durch Verschieben des Targateils in Fahrzeuglängsrichtung eine Ladefläche zum Transport von Ladegütern in der Art eines Pickups freigegeben werden. Auf diese Weise kann in einfacher Weise ein zunächst geschlossenes Fahrzeug oder eine offenes Fahrzeug mit Targastruktur in ein Cabriolet-Fahrzeug mit offener Ladefläche in der Art eines Pickups überführt werden kann. Bei einem 2-sitzigen Fahrzeug mit Ladefläche muss vor dem Verschieben des Targateils keine Ladefläche erzeugt werden. Bei einem 4-sitzigen Fahrzeug ohne Ladefläche muss zunächst durch entsprechendes Positionieren der Rücksitze eine Ladefläche erzeugt werden, was vorteilhaft durch Verschieben der Rücksitze nach vorne, gefolgt von einem Hochklappen der Sitzflächen und Anlegen der Rückenlehnen, erfolgen kann. Vorteilhaft werden die Rücksitze hierbei in eine möglichst nahe Position zu den Vordersitzen gebracht, um eine möglichst große Ladefläche zu erzeugen.

Zudem wird die Fahrgastzelle in vorteilhafter Weise durch das Targateil und den Dachsegmentestapel nach hinten hin abgeschlossen, um auf diese Weise das unerwünschte Eindringen von Abgasen zu verhindern.

Durch das erfindungsgemäße Cabriolet-Kraftfahrzeug kann somit in einfacher Weise ein überwiegend als Personen-Kraftfahrzeug dienendes Fahrzeug oder ein überwiegend als Nutzfahrzeug dienendes Fahrzeug in der Art eines Pickups mit geschlossener oder offener Ladefläche realisiert werden, ohne hierbei die eingangs genannten Nachteile herkömmlicher Pickups oder Geländewagen in Kauf nehmen zu müssen.

Die Erfindung wird nun anhand von Ausführungsbeispielen näher erläutert, wobei Bezug auf die beigefügten Zeichnungen genommen wird.
- Fig. 1: zeigt eine schematische Schnittdarstellung eines erfindungsgemäßen Cabriolet-Kraftfahrzeugs mit geschlossener Fahrgastzelle;
- Fig. 2A-2B: zeigen schematische Schnittdarstellungen zur Veranschaulichung des Überführens des Kraftfahrzeugs von Fig. 1 in ein Fahrzeug mit Targastruktur mit offener Fahrgastzelle ohne Ladefläche;
- Fig. 3: zeigt eine schematische perspektivische Ansicht des Fahrzeugs mit Targastruktur mit offener Fahrgastzelle ohne Ladefläche von oben;
- Fig. 4: zeigt eine schematische Schnittdarstellung des Fahrzeugs mit Targastruktur mit offener Fahrgastzelle und von oben zugänglicher Ladefläche;
- Fig. 5A-5B: zeigen schematische Schnittdarstellungen zur Veranschaulichung des Überführens des Kraftfahrzeugs von Fig. 1 in ein Fahrzeug mit offener Fahrgastzelle und mit Pickup-Ladefläche;
- Fig. 6: zeigt eine schematische Schnittdarstellung des offenen Kraftfahrzeugs mit Pickup-Ladefläche;
- Fig. 7: zeigt eine schematische perspektivische Ansicht des Kraftfahrzeugs von Fig. 6 von oben.

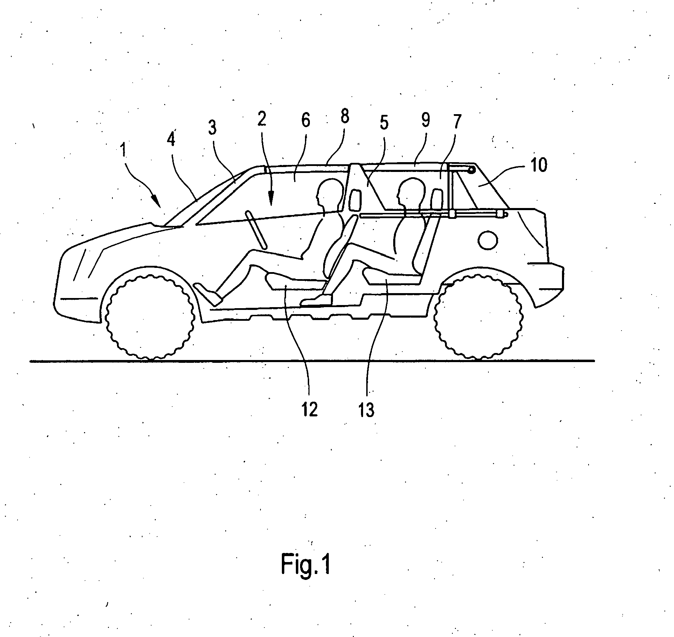

Es wird zunächst Bezug auf Figur 1 genommen, worin eine schematische Schnittdarstellung eines Ausführungsbeispiels eines erfindungsgemäßen Kraftfahrzeugs mit einer geschlossenen Fahrgastzelle dargestellt ist. Demnach umfasst ein Cabriolet-Kraftfahrzeug, welches insgesamt mit der Bezugszahl 1 bezeichnet ist, eine Fahrgastzelle 2 mit Vordersitzen 12 und Rücksitzen 13.

Die Fahrgastzelle ist in einem vorderen Bereich oberhalb der Gürtellinie (Bordkante) des Fahrzeugs zur Seite hin durch die im Vorderrahmen 3 aufgenommene Windschutzscheibe 4 und die beiden vorderen Seitenscheiben 6 umgrenzt, welche sich von dem Vorderrahmen 3 bis zu einem im Bereich der herkömmlichen B-Säulen angeordneten Überrollbügel 5 ("Targabügel") erstrecken. Der Überrollbügel 5 stützt sich an der Fahrzeugkarosserie ab und dient als Teil der Tragstruktur der Karosserie. Die außenliegende Oberfläche des Überrollbügels 5 fluchtet mit der Kontur der Karosserieaußenhaut. Nach oben hin ist die Fahrgastzelle 2 durch ein vorderes Dachsegment 8 abgegrenzt, welches sich von dem Vorderrahmen 3 zu dem Überrollbügel 5 erstreckt.

Im einem hinteren Bereich ist die Fahrgastzelle 2 ober-halb der Gürtellinie zur Seite hin durch die hinteren Seitenscheiben 7, welche sich von dem Überrollbügel 5 bis zu den hinteren Dachsäulen (C-Säulen) 10 erstrecken, und nach hinten zu durch eine Heckscheibe 14, sowie eine Heckklappe 15 abgegrenzt. Die Heckscheibe 14 ist hierbei nach oben klappbar, währen die Heckklappe 15 nach unten umgeklappt werden kann, um so eine Hecköffnung der Fahrgastzelle freizugeben. Im hinteren Bereich ist die Fahrgastzelle 2 nach oben hin durch das hintere Dachsegement 9 abgegrenzt, welches sich von dem Überrollbügel 5 bis zu einem die beiden hinteren Dachsäulen 10 versteifenden, in Fahrzeugquerrichtung verlaufenden, oberen Dachquerträger 11 erstreckt.

Das Fahrzeugdach setzt sich demnach aus dem vorderen Dachsegment 8 und dem hinteren Dachsegment 9 zusammen, wobei das vordere Dachsegment 8 mittels wenigstens eines Lenkers auf das hintere Dachsegment 9 verschwenkt werden kann.

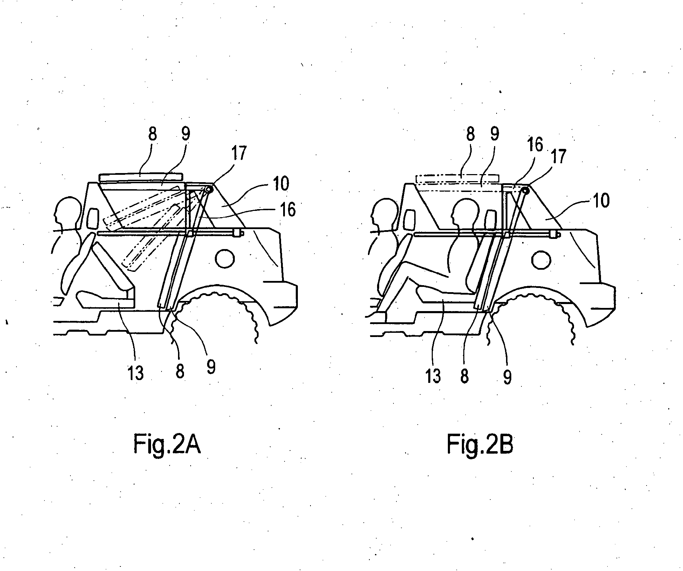

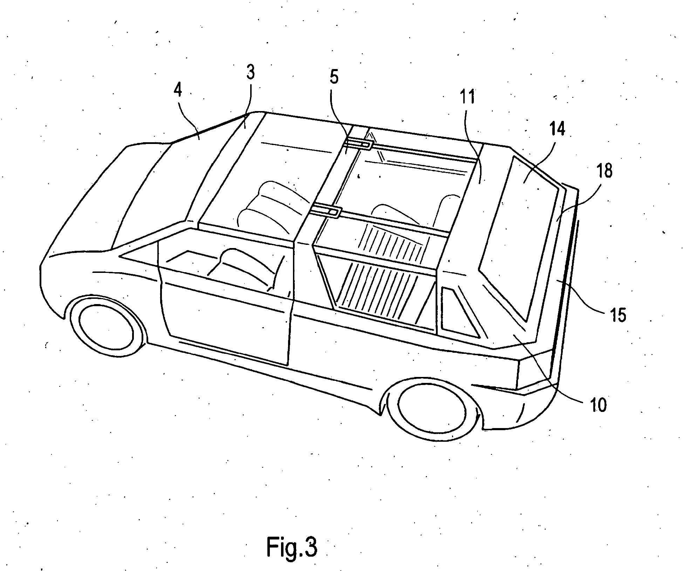

Es wird nun Bezug auf die Figuren 2A, 2B und 3 genommen, worin dargestellt ist, wie das geschlossene Kraftfahrzeug von Fig. 1 in ein offenes Personen-Kraftfahrzeug ohne Ladefläche (4-sitzige Targastruktur) überführt werden kann. Zu diesem Zweck wird das vordere Dachsegment 8 auf das hintere Dachsegment 9 mittels eines zwischen diesen beiden angeordneten Lenkers verschwenkt, wodurch ein Dachsegmentestapel entsteht. Der aus den beiden Dachsegmenten 8, 9 aufgebaute Dachsegmentestapel wird anschließend mittels Lenker 16, welche in einem Schwenklager 17 schwenkbar gelagert sind, in die Fahrgastzelle 2 in eine Endpo-sition hinter den beiden Rücksitzen 13 verschwenkt, wobei in den Figuren 2A und 2B die jeweiligen Endpositionen und verschiedene Zwischenpositionen des Dachsegmentestapels dargestellt sind. Um ein Verschwenken des Dachsegmentestapels in die Fahrgastzelle 2 zu ermöglichen, müssen zunächst die beiden Rücksitze 13 nach vorne verschoben und deren Rücklehnen nach vorne umgelegt werden, wie in Fig. 2A gezeigt ist. Nachdem der Dachsegmentestapel in seine Endposition hinter den beiden Rücksitzen 13 gebracht worden ist, können die Rücksitze wieder in ihre Nutzstellung gebracht werden, was in Fig. 2B gezeigt ist. Insbesondere der perspektivischen Darstellung von Fig. 3 ist die nun erhaltene Targa-Struktur des Fahrzeugs mit offenem Dach ohne Ladefläche zur überwiegenden Nutzung als Personen-Kraftfahrzeug zu entnehmen. Weiterhin kann Fig. 3 entnommen werden, dass die beiden hinteren Dachsäulen 10 zudem durch einen in Fahrzeugquerrichtung sich erstreckenden, unteren Querträger 18 versteift sind. Die beiden hinteren Dachsäulen 10, oberer Querträger 11 und unterer Querträger 18 bilden gemeinsam ein "Targa-Teil".

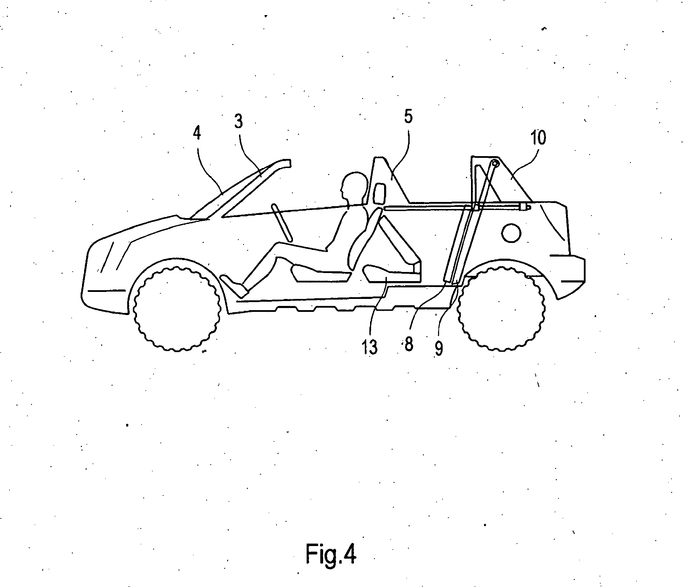

Werden die beiden Rücksitze 13 nicht mehr in ihre Nutzstellung gebracht, so entsteht ein Fahrzeug mit einer 2-sitzigen Targastruktur mit einer nach oben hin offenen Ladefläche. Eine solche Situation ist in Fig. 4 gezeigt.

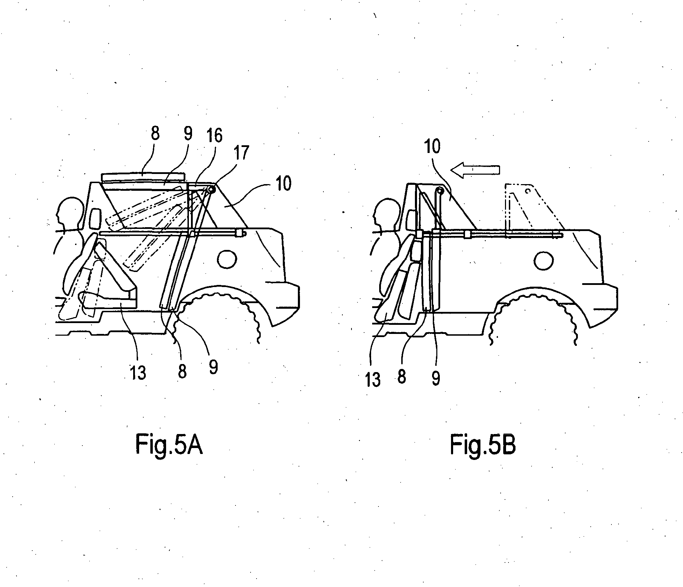

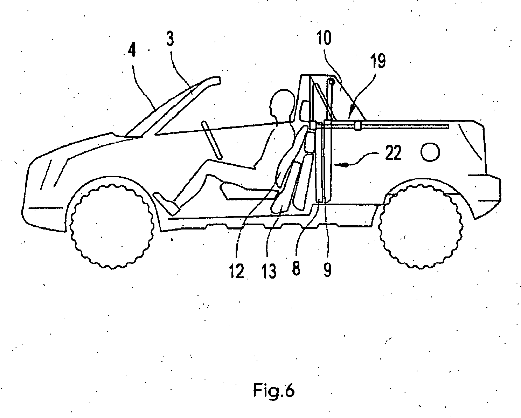

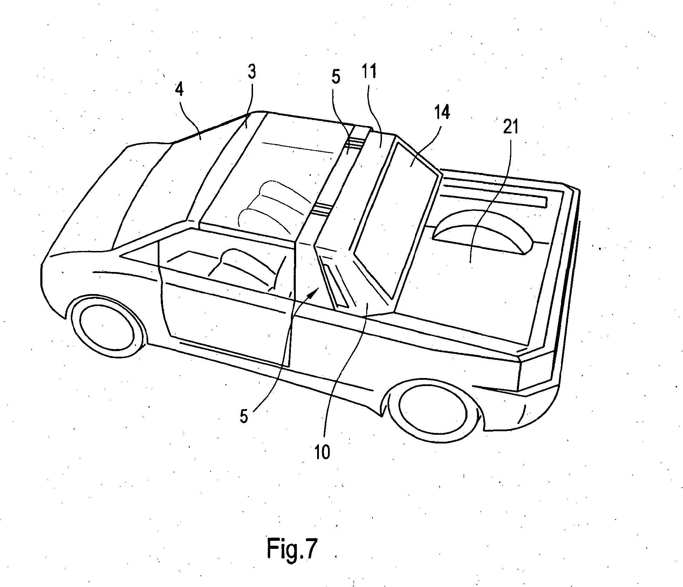

Es wird nun Bezug auf die Figuren 5A, 5B, 6 und 7 genommen, worin dargestellt ist, wie das offene Kraftfahrzeug mit Targastruktur von Fig. 3 in ein offenes, überwiegend als Nutz-Kraftfahrzeug dienendes Fahrzeug mit offener Ladefläche in der Art eines Pickups überführt werden kann. Zu diesem Zweck wird von einer Situation ausgegangen, wie sie in Fig. 2A dargestellt ist, nämlich mit nach vorne verschobenen Rücksitzen 13, deren Rücklehnen nach vorne umgelegt sind, um den aus den beiden Dachsegmenten 8, 9 bestehenden Dachsegmentestapel mithilfe der Lenker 16 in die Fahrgastzelle 2 verschwenken zu können. Nach dem erfolgten Verschwenken des Dachsegmentestapels in eine Position hinter den in Nutzstellung gebrachten Rücksitzen 13 werden die Rücksitze 13 jedoch nicht in wieder in ihre Nutzstellung gebracht, sondern es werden die Sitzteile der Rücksitze 13 in vertikaler Richtung hochgeklappt und mit angelegten Rückenlehnen bis zur Anlage gegen die Rückseite der Vordersitze 12 gebracht, so dass eine Ladefläche entsteht.

Wie in Fig. 4B dargestellt ist, werden anschließend die hinteren Dachsäulen 10 und damit das komplette Targateil mit angelenktem Dachsegmentestapel mittels eines Verschiebungsmechanismus auf Höhe der Gürtellinie in Fahrzeuglängsrichtung verschoben bis sich das Targateil unter den Überrollbügel 5 schiebt und eine Endposition erreicht, wodurch die Ladefläche 21 freigegeben wird. Die erreichte Endposition ist in den beiden Figuren 4 und 5 dargestellt. In der Endposition formt das Targateil mit dem Überrollbügel 5 eine nicht näher dargestellte Dichtlinie zur Abdichtung der nun noch verbleibenden 2-sitzigen Fahrgastzelle nach hinten. Dem gleichen Zweck dient eine in Fig. 4 dargestellte Dichtlinie in der Hutablage 19, sowie eine Dichtlinie in der Seitenwand 22. Auf diese Weise kann die Fahrgastzelle nach hinten abgedichtet werden, wodurch in vorteilhafter Weise das unerwünschte Eintreten von Abgasen in die Fahrgastzelle vermieden werden kann. Zur Verschiebung der hinteren Dachsäulen 10 sind auf Höhe der Gürtellinie des Fahrzeugs Führungsschienen 20 vorgesehen, die in Wirkverbindung mit in den hinteren Dachsäulen 10 geformten Führungsschlitten stehen, um so das Targateil zu verschieben. Eine Verschiebung des Targateils erfolgt hierbei vorzugsweise automatisch, beispielsweise angetrieben durch einen vorteilhaft vom Bordnetz gespeisten Elektromotor. Der Vollständigkeit halber sei noch erwähnt, dass die hinteren Seitenscheiben 7 zum Freigeben der Ladefläche 21 versenkt werden.

Wie in den dargestellten Ausführungsbeispielen gezeigt wurde, kann erfindungsgemäß ein Kraftfahrzeug als ein 4-sitziges, geschlossenes Personen-Kraftfahrzeug ("Station-wagon"), das überwiegend zur Personenbeförderung dient, als ein 4- oder 2-sitziges Personen/Nutz-Kraftfahrzeug mit Targastruktur, welches der Personen-/Nutzlastbeförderung dient, sowie als ein 2-sitziges Nutz-Kraftfahrzeug mit geschlossener oder offener Pickup-Ladefläche zur überwiegenden Nutzlastbeförderung realisiert werden. Ein Überführen des Fahrzeugs zwischen den realisierbaren Gebrauchsformen ist in einfacher Weise durch Stapeln der Dachsegmente und Verschwenken des Dachsegmentestapels in die Fahrgastzelle durch Lenker am Targateil, sowie gegebenenfalls durch ein entsprechendes Anordnen der Rücksitze zum Erzeugen einer Ladefläche möglich.

### Bezugszeichenliste

- 1: Kraftfahrzeug
- 2: Fahrgastzelle
- 3: Vorderrahmen
- 4: Windschutzscheibe
- 5: Überrollbügel
- 6: vordere Seitenscheibe
- 7: hintere Seitenscheibe
- 8: vorderes Dachsegment
- 9: hinteres Dachsegment
- 10: hintere Dachsäule
- 11: oberer hinterer Dachquerträger
- 12: Vordersitz
- 13: Rücksitz
- 14: Heckscheibe
- 15: Heckklappe
- 16: Lenker
- 17: Lenkerschwenklagerung
- 18: unterer Querträger
- 19: Hutablage-Dichtlinie
- 20: Führungsschiene
- 21: Ladefläche
- 22: Seitenwand-Dichtlinie

## Patentansprüche

1. Cabriolet-Kraftfahrzeug (1), umfassend:
- ein aus wenigstens zwei Dachsegmenten (8, 9) aufgebautes Dach, welche in eine Öffnungsstellung bringbar sind,
- ein Targateil, umfassend wenigstens durch einen oberen Dachquerträger (11) versteifte hintere Dachsäulen (10),
- einen Targabügel, umfassend einen im Bereich zwischen einem Vorderrahmen (3) und dem Targateil angeordneten Überrollbügel (5) , wobei
die wenigstens zwei Dachsegmente mittels eines Bewegungsmechanismus zu einem zwischen dem Targabügel und dem Targateil angeordneten Dachsegmentestapel stapelbar sind, **dadurch gekennzeichnet, dass** anschließend der Dachsegmentestapel mittels wenigstens eines am oberen Dachquerträger des Targateils angebrachten Lenkers (16) in die Fahrgastzelle (2) verschwenkbar ist.

2. Kraftfahrzeug nach Anspruch 1,
**dadurch gekennzeichnet, dass** das Kraftfahrzeug ein 4-sitziges Fahrzeug mit Vorder- und Rücksitzen ist und der Dachsegmentestapel in eine hinter den Rücksitzen befindliche Position verschwenkbar ist.

3. Kraftfahrzeug nach Anspruch 1 oder 2,
**dadurch gekennzeichnet, dass** das Targateil im Bereich der Gürtellinie des Kraftfahrzeugs in Fahrzeuglängsrichtung verschiebbar ist.

4. Kraftfahrzeug nach Anspruch 3,
**dadurch gekennzeichnet, dass** durch Verschieben des Targateils in Fahrzeuglängsrichtung eine nach oben hin offene Pickup-Ladefläche freigegeben wird.

5. Kraftfahrzeug nach Anspruch 3 oder 4,
**dadurch gekennzeichnet, dass** das Targateil in eine dem Targabügel anliegende Position verschiebbar ist.

6. Kraftfahrzeug nach Anspruch 5,
**dadurch gekennzeichnet, dass** der Dachsegmentestapel und das Targateil die Fahrgastzelle nach hinten hin abschließen.

7. Kraftfahrzeug nach einem der vorhergehenden Ansprüche,
**dadurch gekennzeichnet, dass** die Dachsegmente mittels Lenker gegeneinander verschwenkbar sind.

8. Kraftfahrzeug nach einem der vorhergehenden Ansprüche,
**dadurch gekennzeichnet, dass** ein zwischen dem Vorderrahmen und dem Targabügel angeordnetes vorderes Dachsegment und ein zwischen dem Targabügel und dem Targateil angeordnetes hinteres Dachsegment vorgesehen sind, wobei das vordere Dachsegment auf das hintere Dachsegment verschwenkbar ist.

## Claims

1. A convertible motor vehicle (1), comprising:
- a roof that is composed of at least two roof segments (8, 9), which can be brought to an open position,
- a targa section, comprising rear roof pillars (10) which are at least reinforced by an upper roof cross member (11),
- a targa bar, comprising a roll bar (5) arranged in the region between a front frame (3) and the targa section,
wherein the at least two roof segments can be stacked by means of a movement mechanism into a roof segment stack arranged between the targa bar and the targa section, **characterized in that** the roof segment stack can subsequently be pivoted into the passenger compartment (2) by means of at least one guide rod (16) that is attached to the upper roof cross member of the targa section.

2. A motor vehicle according to claim 1, **characterized in that** the motor vehicle is a four-seat vehicle with front and rear seats and the roof segment stack can be pivoted to a position situated behind the rear seats.

3. A motor vehicle according to claim 1 or 2, **characterized in that** the targa section is displaceable in the longitudinal direction of the vehicle in the region of the waistline of the motor vehicle.

4. A motor vehicle according to claim 3, **characterized in that** an upwardly open pickup loading area is released by displacing the targa section.

5. A motor vehicle according to claim 3 or 4, **characterized in that** the targa section is displaceable to a position resting on the targa bar.

6. A motor vehicle according to claim 5, **characterized in that** the roof segment stack and the targa section close off the passenger compartment to the rear.

7. A motor vehicle according to one of the preceding claims, **characterized in that** the roof segments are pivotable against each other by means of guide rods.

8. A motor vehicle according to one of the preceding claims, **characterized in that** a front roof segment arranged between the front frame and the targa bar and a rear roof segment arranged between the targa bar and the targa section are provided, wherein the front roof segment can be pivoted onto the rear roof segment.

## Revendications

1. Véhicule à moteur de type cabriolet (1), comprenant :
- un toit composé d'au moins deux segments de toit (8, 9) qui peut être amené dans une position d'ouverture,
- une partie de toit Targa comprenant des montants de toit arrière (10) raidis au moins par une traverse de toit supérieure (11),
- un arceau Targa, comprenant un arceau anti-retournement (5) disposé entre un
cadre avant (3) et la partie de toit Targa,
dans lequel les au moins deux segments de toit peuvent être empilés au moyen d'un mécanisme de déplacement pour former une pile de segments de toit disposée entre l'arceau Targa et la partie de toit Targa, **caractérisé en ce que** l'on peut ensuite faire basculer la pile de segments de toit et la faire entrer dans l'habitacle (2) au moyen d'au moins une tringle (16) disposée sur la traverse de toit supérieure de la partie de toit Targa.

2. Véhicule à moteur selon la revendication 1, **caractérisé en ce que** le véhicule à moteur est un véhicule à 4 places avec des sièges avant et arrière et **en ce que** la pile d'éléments de toit peut basculer dans une position située derrière les sièges arrière.

3. Véhicule à moteur selon la revendication 1 ou 2, **caractérisé en ce que** la partie de toit Targa est capable de translation au niveau de la ligne de flanc du véhicule à moteur dans le sens de la longueur du véhicule.

4. Véhicule à moteur selon la revendication 3, **caractérisé en ce que** la translation de la partie de toit Targa dans le sens de la longueur du véhicule dégage une plate-forme de pickup ouverte vers le haut.

5. Véhicule à moteur selon la revendication 3 ou 4, **caractérisé en ce que** la partie de toit Targa peut être déplacée dans une position contiguë à l'arceau Targa.

6. Véhicule à moteur selon la revendication 5, **caractérisé en ce que** la pile de segments de toit et la partie de toit Targa ferment l'habitacle vers l'arrière.

7. Véhicule à moteur selon l'une des revendications précédentes, **caractérisé en ce que** les segments de toit peuvent pivoter les uns par rapport aux autres au moyen de tringles.

8. Véhicule à moteur selon l'une des revendications précédentes, **caractérisé en ce qu'**il est prévu un segment de toit antérieur disposé entre le cadre avant et l'arceau Targa et un segment de toit postérieur disposé entre l'arceau Targa et la partie de toit Targa, le segment de toit antérieur pouvant pivoter sur le segment de toit postérieur.
